# EUROPÄISCHE PATENTSCHRIFT

(11) **EP 1 025 706 B1**
(45) Veröffentlichungstag und Bekanntmachung des Hinweises auf die Patenterteilung: **05.12.2001**
(21) Anmeldenummer: 98954192.5
(22) Anmeldetag: 18.09.1998
(51) Int. Cl.: H04N 7/26, H04N 7/46

(54) **VERFAHREN ZUR VERBESSERUNG DER KONTURCODIERUNG VON BILDSEQUENZEN SOWIE ANWENDUNG**
METHOD FOR IMPROVED CONTOUR CODING OF IMAGE SEQUENCES, AND APPLICATION
PROCEDE D'AMELIORATION DU CODAGE DE CONTOURS DE SEQUENCES D'IMAGES, ET APPLICATION

(30) Priorität: 22.10.1997 DE 19746611
(43) Veröffentlichungstag der Anmeldung: 09.08.2000
(73) Patentinhaber: ROBERT BOSCH GMBH, 70442 Stuttgart (DE)
(72) Erfinder: ZHOU, Minhua, Plano, TX 75093 (US)
(86) Internationale Anmeldenummer: DE9802772
(87) Internationale Veröffentlichungsnummer: WO9921366

(56) Entgegenhaltungen:
- EP-A- 0 577 337
- WO-A-97/29595
- US-A- 5 317 397
- US-A- 5 642 166
- BRADY N ET AL: "CONTEXT-BASED ARITHMETIC ENCODING OF 2D SHAPE SEQUENCES" PROCEEDINGS. INTERNATIONAL CONFERENCE ON IMAGE PROCESSING,26. Oktober 1997, Seiten 29-32, XP002065551

## Beschreibung

### Stand der Technik

Die Erfindung betrifft ein Verfahren zur Verbesserung der Konturcodierung von Bildsequenzen sowie eine Anwendung.

Im MPEG-4 Verification Model Version 8.0 (VM8.0), ISO/IEC JTC1/SC29/WG11, MPEG97/N1796 wird ein kontextbasierender arithmetischer Codieralgorithmus (context based arithmetic encoding CAE) zur binären Konturcodierung von I (Intraframe)-, P (einseitig bewegungskompensiert prädizierten)- und B (bidirektional interpolierten)-Bildanteilen (VOP video object plane) benutzt.

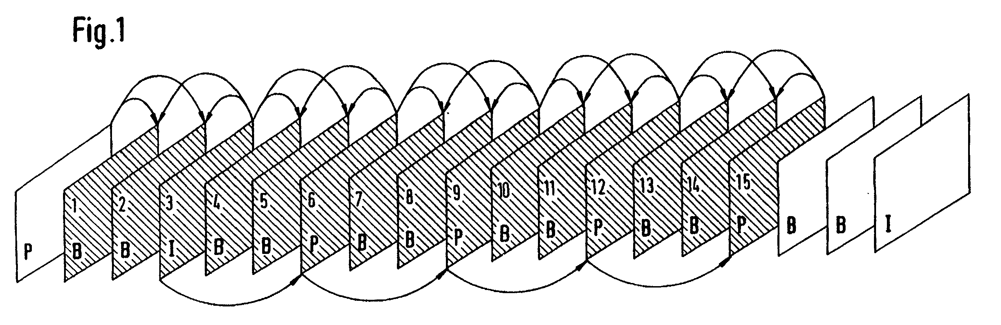

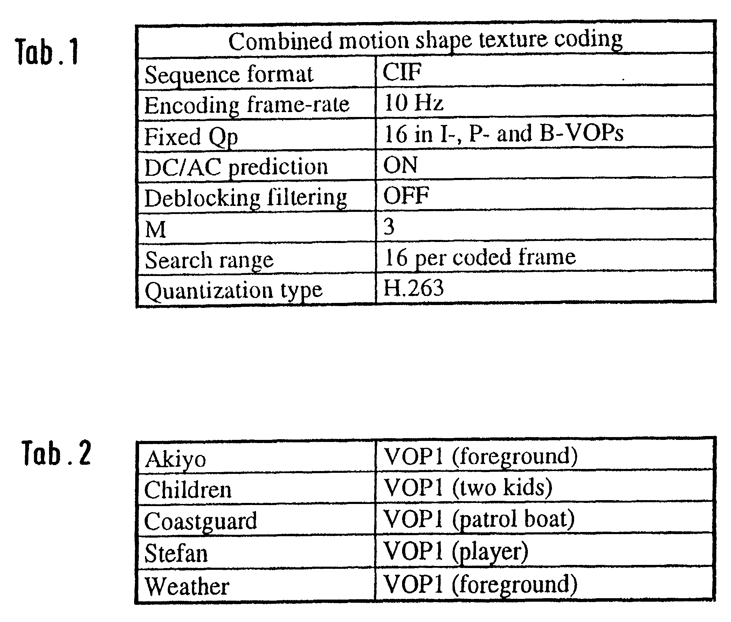

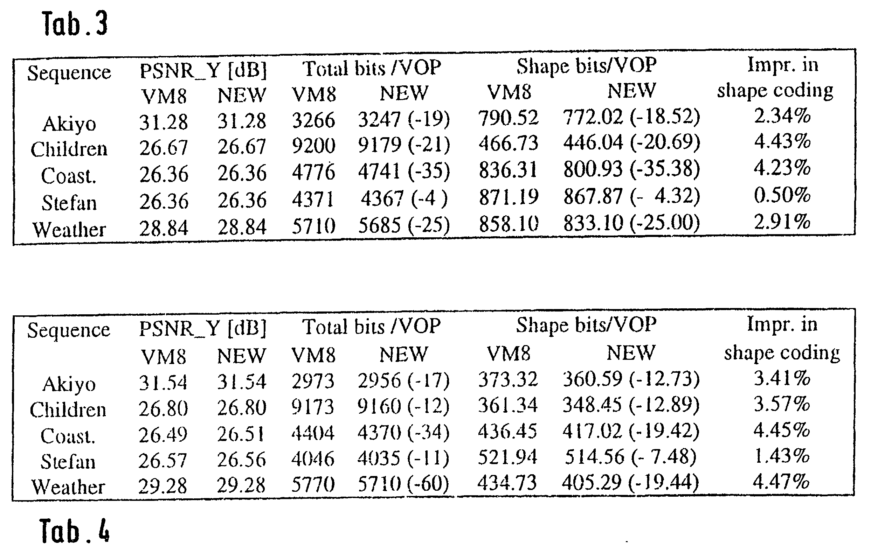

Figur 1 zeigt als Beispiel für eine Bildsequenz bestehend aus I-, P- und B-VOPs eine GOF (group of frames)-Struktur im MPEG-1 Standard. Die ausschließlich nach der Intraframe-Technik codierten Bildanteile sind mit I bezeichnet, die einseitig bewegungskompensiert prädizierten Bildanteile mit P und die dazwischenliegenden jeweils bidirektional interpolierten Bildanteile mit B. Das Beispiel nach Figur 1 zeigt vier P-Bildanteile pro GOF und jeweils zwei BBildanteile zwischen I- und/oder P-Bildanteilen. Die Länge des GOF ist nicht fest vorgegeben, sondern jeweils durch die Anzahl der verschiedenen Bildtypen bestimmt. Ein wesentliches Merkmal des CAE-Algorithmus ist es, daß bei der "inter" Konturcodierung (INTER CAE Shape Coding) eines aktuellen B-VOP stets ein zeitlich nachfolgender VOP als Referenzwert (backward reference VOP) herangezogen wird und zwar sowohl für die binäre Konturreferenz als auch für die Konturmode-Referenz (Shape Mode Reference). Da jedoch B-VOPs zufälliger Kontur manchmal nur auf Bildinhalte eines zeitlich davorliegenden VOPs als Referenz (Forward Reference VOP) zugreifen, muß mit dem gegenwärtigen CAE-Algorithmus die binäre Kontur dieses B-VOPs in gleicher Weise wie ein I-VOP codiert werden. Dies führt zu einer beträchtlichen Degradation der Codiereffizienz bei solchen B-VOPs.

### Vorteile der Erfindung

Mit den Maßnahmen gemäß Anspruch 1 läßt sich die Codiereffizienz insbesondere für die Konturcodierung bei bidirektional interpolierten Bildanteilen (B-VOPs) verbessern. Das Verfahren nach der Erfindung liefert eine zeitadaptive Konturcodierung für B-VOPs. Während einer kontextbasierten Konturcodierung kann ein B-VOP entweder auf einen zeitlich davorliegenden I-VOP bzw. P-VOP (forward reference VOP) oder auf einen zeitlich folgenden (backward reference VOP) I-VOP bzw. P-VOP als Referenzwert für die Konturcodierung zugreifen.

Das Verfahren nach der Erfindung zeichnet sich außerdem dadurch aus, daß keine Syntaxänderungen notwendig sind und somit eine Verwendung bei bestehenden Standards, z.B. dem MPEG-4-Standard, auf einfache Weise möglich ist.

### Beschreibung von Ausführungsbeispielen

Bei der Erfindung werden unterschiedlich codierte Bildanteile einer Bildsequenz, wie auch in Figur 1 dargestellt, verwendet. Dabei sind I-VOPs Bildanteile, die ausschließlich nach der Intraframe-Technik codiert sind. P-VOPs sind Bildanteile, die einseitig bewegungskompensiert prädiziert sind und B-VOPs sind bidirektional interpolierte Bildanteile. Nach der Erfindung kann ein B-VOP entweder auf einen zeitlich davorliegenden VOP oder einen zeitlich darauffolgenden VOP während einer CAE-Kontur-Codierung als Referenzwert zugreifen, der nach der Intraframe-Technik codiert ist oder einseitig bidirektional prädiziert ist. Welcher VOP als Referenzwert selektiert wird, richtet sich nach den folgenden Auswahlkriterien:
- wenn bei einem aktuellen bidirektional interpolierten Bildanteil B-VOP entweder ein zeitlich davorliegender (forward) I- bzw. P-VOP oder ein zeitlich darauffolgender (backward) I- bzw. P-VOP fehlt, wird der verfügbare (forward/backward) I- bzw. P-VOP als Referenzwert für die binäre Konturcodierung und den Konturmode nach dem CAE-Kontur-Codierverfahren gewählt;
- wenn sowohl ein "forward"- und ein "backward"-VOP als Referenzwert verfügbar sind, wird jener VOP (I-VOP oder P-VOP) als binärer Konturreferenzwert und Konturmode-Referenzwert ausgewählt, der den kleineren zeitlichen Abstand zum jeweils aktuellen bidirektional interpolierten Bildanteil B-VOP aufweist;
- wenn der aktuelle B-VOP den gleichen zeitlichen Abstand sowohl zum "forward" als auch zum "backward" Referenz-VOP hat, wird stets einer dieser beiden VOPs als Referenzwert ausgewählt und zwar vorzugsweise der zeitlich darauffolgende (backward VOP).

Angenommen, es liegt eine Bildsequenz mit zufälliger Kontur vor mit B0 als erstem und B7 als letztem Bildanteil, z.B.
B0 B1 I2 B3 B4 P5 B6 B7.
Entsprechend den zuvor angegebenen Auswahlkriterien werden B0 und B1 auf I2 (intra) als Referenz VOP zugreifen, da ein "forward" Referenz VOP nicht existiert. B3 greift auf I2 zu, da er den kleineren zeitlichen Abstand zu I2 als zu P5 hat. B4 nimmt P5 (prädiziert) als Referenz VOP, da er zeitlich gesehen der nächstliegende I- oder P-VOP ist. B6 und B7 haben P5 ebenfalls als Referenz VOP, da ein "backward" VOP nicht verfügbar ist.

Im Vergleich zum bisher gebräuchlichen CAE-Algorithmus weist das erfindungsgemäße zeitadaptive Konturcodierverfahren eine effizientere binäre Konturcodierung bei B-VOPs auf, da die INTER CAE-Konturcodierung sogar dann erlaubt ist, wenn ein "backward" Referenz VOP nicht verfügbar ist. Außerdem existiert normalerweise eine größere Korelation zwischen zwei VOPs mit einem kleineren zeitlichen Abstand, so daß die Auswahl eines Referenz VOP mit einem kleineren zeitlichen Abstand zum aktuellen B-VOP die Konturcodiereffizienz beträchtlich verbessert.

Das erfindungsgemäße Verfahren stützt sich vollständig auf den MPEG-4 CAE-Algorithmus. Die VOP-Zeitinstanz ist in der VOP Layer durch "modulo time base" und "VOP time increment" beschrieben (vgl. auch die diesbezügliche Beschreibung in der DE-A- 197 35 607) und es wird durch "VOP coded" angezeigt, ob ein VOP verfügbar ist oder nicht. Eine Syntaxänderung gegenüber dem MPEG-4 Standard ist deswegen nicht notwendig. Hierdurch wird der MPEG-4 Konturdecodierprozeß entsprechend den zuvor aufgezeigten Auswahlkriterien bei der Selektion des Referenz VOP für einen aktuellen B-VOP modifiziert.

Wie sich das erfindungsgemäße Verfahren auf die Codiereffizienz auswirkt, wird nachfolgend anhand von Simulationen mit Testbildsequenzen dargestellt. Es wurde die MoMuSys-Software VM8-971016 verwendet. Die wichtigsten Codierparameter sind in Tabelle 1 aufgelistet. Dabei gibt Qp die Quantisierungsstufenhöhe als konstante Größe an, d.h. ohne Ratenanpassung. M gibt die Wiederholfolge der I- und P-VOPs an. Für M = 3 ist jeder dritte Bildanteil einer Bildsequenz ein I-VOP oder P-VOP, dazwischen liegen B-VOPs. In Tabelle 2 sind fünf Testbildsequenzen (Video Objects) für die durchgeführten Simulationen dargestellt. Jede Sequenz hat 100 codierte Frames. Nur der erste Frame ist intraframecodiert (I-VOP). Mit M = 3 wird die Sequenz als
I B* B P B* B P B* B P B* B P
in Displayordnung dargestellt. Bei der Konturcodierung werden die mit Stern markierten B-VOPs abweichend vom VM8.0 CAE-Algorithmus codiert, da sie auf die "forward" Referenz VOPs als Referenzwert zugreifen, während die übrigen B-VOPs wie beim VM-Algorithmus codiert werden. Deshalb ist es erwähnenswert, daß die nachfolgend aufgezeigten Verbesserungen auf den mit Stern markierten B-VOPs basieren.

Die experementellen Resultate in den Fällen von verlustloser (lossless) und von verlustbehafteter (lossy) Konturcodierung mit beispielsweise 10 % Rekonstruktionsverlust sind in den Tabellen 3 und 4 dargestellt. Dabei zeigt Tabelle 3 den "Lossless"-Fall und Tabelle 4 den "Lossy"-Fall. In der ersten Spalte sind jeweils die Bildsequenzen aufgeführt. Die beiden folgenden Spalten bezeichnen jeweils den Rauschabstand (peak signal to noise ratio PSNR) für eine Codierung nach VM8 und nach dem erfindungsgemäßen Verfahren (NEW).

In der letzten Spalte ist jeweils die Verbesserung der Strukturcodierung nach der Erfindung in Prozent aufgeführt.

Bei Nutzung des erfindungsgemäßen Verfahrens kann eine Bitraten-Reduktion von bis zu 10 % in der Konturcodierung erreicht werden. Bei der "Lossy"-Konturcodierung erhöht das erfindungsgemäße Verfahren nicht nur die Konturcodierungseffizienz, sondern auch leicht die Bewegungs- und Texturcodierungseffizienz. Dies rührt von der Tatsache her, daß in Tabelle 4 die Gesamtbitreduktion einschließlich Kontur-, Bewegungs- und Texturcodierung größer ist als die Bitreduktion in der Konturcodierung allein.

wie zuvor erwähnt, kommt die Verbesserung aufgrund der mit Stern markierten B-VOPs zustande. Deshalb gestattet die Betrachtung nur der mit Stern markierten B-VOPs bei der binären Konturcodierung eine weitere Bitratenreduktion bis zu etwa 30 %.

## Patentansprüche

1. Verfahren zur Verbesserung der Konturcodierung von Bildsequenzen mit nach der Intraframe-Technik codierten Bildanteilen (I-VOP), prädizierten Bildanteilen (P-VOP) und mit bidirektional interpolierten Bildanteilen (B-VOP) mit folgendem Schritt:
- für die bidirektional interpolierten Bildanteile (B-VOP) werden zur Konturcodierung als Referenzwert jeweils jene nach der Intraframe-Technik (I-VOP) codierten Bildanteile oder prädizierten Bildanteile (P-VOP) herangezogen, die den kleineren zeitlichen Abstand zum jeweils aktuellen bidirektional interpolierten Bildanteil (B-VOP) aufweisen.

2. Verfahren nach Anspruch 1, **gekennzeichnet durch** folgende Schritte:
- wenn ein zeitlich vor einem aktuellen bidirektional interpolierten Bildanteil (B-VOP) gelegener nach der Intraframe-Technik codierter (I-VOP) oder prädizierter Bildanteil (P-VOP) fehlt, wird der zeitlich auf den bidirektional interpolierten Bildanteil (B-VOP) folgende nach der Intraframe-Technik codierten (I-VOP) oder prädizierte Bildanteil (P-VOP) als Referenzwert für die Konturcodierung des bidirektional interpolierten Bildanteils (B-VOP) herangezogen,
- wenn ein zeitlich nach einem aktuellen bidirektional interpolierten Bildanteil (B-VOP) gelegener nach der Intraframe-Technik codierter (I-VOP) oder prädizierter Bildanteil (P-VOP) fehlt, wird der zeitlich vor dem bidirektional interpolierten Bildanteil (B-VOP) liegende nach der Intraframe-Technik codierte (I-VOP) oder prädizierte Bildanteil (P-VOP) als Referenzwert für die Konturcodierung des bidirektional interpolierten Bildanteils (B-VOP) herangezogen.

3. Verfahren nach Anspruch 1, **gekennzeichnet durch** folgenden Schritt:
- wenn ein aktueller bidirektional interpolierter Bildanteil (B-VOP) sowohl von einem zeitlich davorliegenden oder zeitlich darauffolgenden nach der Intraframe-Technik codierten Bildanteil (I-VOP) oder prädizierten Bildanteil (P-VOP) den gleichen zeitlichen Abstand hat, wird stets einer dieser beiden Bildanteile als Referenzwert für die Konturcodierung des aktuellen bidirektional interpolierten Bildanteils herangezogen.

4. Verfahren nach Anspruch 3, **dadurch gekennzeichnet, daß** stets der zeitlich auf einen aktuellen bidirektional interpolierten Bildanteil (B-VOP) folgende nach der Intraframe-Technik codierten Bildanteil (I-VOP) oder prädizierte Bildanteil (P-VOP) als Referenzwert für die Konturcodierung des aktuellen bidirektional interpolierten Bildanteils herangezogen wird.

5. Anwendung des Verfahrens nach einem der Ansprüche 1 bis 4 bei der Decodierung von MPEG-4 konturcodierten Bildanteilen.

## Claims

1. Method for improving the contour coding of picture sequences with picture components (I-VOP) coded according to the intraframe technique, predicted picture components (P-VOP) and with bidirectionally interpolated picture components (B-VOP), having the following step:
- for the bidirectionally interpolated picture components (B-VOP), use is made, for the contour coding, as reference value, in each case of those picture components coded according to the intraframe technique (I-VOP) or predicted picture components (P-VOP) which have the smaller temporal spacing from the respective current bidirectionally interpolated picture components (B-VOP).

2. Method according to Claim 1, **characterized by** the following steps:
- in the absence of a picture component (I-VOP) coded according to the intraframe technique or a predicted picture component (B-VOP), the said picture component temporally preceding a current bidirectionally interpolated picture component (B-VOP), the picture component (I-VOP) coded according to the intraframe technique or the predicted picture component (P-VOP), the said picture component temporally succeeding the bidirectionally interpolated picture component (B-VOP), is used as reference value for the contour coding of the bidirectionally interpolated picture component (B-VOP),
- in the absence of a picture component (I-VOP) coded according to the intraframe technique or a predicted picture component (P-VOP), the said picture component temporally succeeding a current bidirectionally interpolated picture component (B-VOP), the picture component (I-VOP) coded according to the intraframe technique or the predicted picture component (P-VOP), the said picture component temporally preceding the bidirectionally interpolated picture component (B-VOP), is used as reference value for the contour coding of the bidirectionally interpolated picture component (B-VOP).

3. Method according to Claim 1, **characterized by** the following step:
- if a current bidirectionally interpolated picture component (B-VOP) has the same temporal spacing both from a temporally preceding or temporally succeeding picture component (I-VOP) coded according to the intraframe technique or predicted picture component (P-VOP), one of these two picture components is always used as reference value for the contour coding of the current bidirectionally interpolated picture component.

4. Method according to Claim 3, **characterized in that** the picture component (I-VOP) coded according to the intraframe technique or the predicted picture component (B-VOP), the said picture component temporally succeeding a current bidirectionally interpolated picture component (B-VOP), is always used as reference value for the contour coding of the current bidirectionally interpolated picture component.

5. Application of the method according to one of Claims 1 to 4 in the decoding of MPEG-4 contour-coded picture components.

## Revendications

1. Procédé d'amélioration du codage de contour de séquences d'images ayant des composantes d'image (I-VOP) codées selon la technique intratrame, des composantes d'image prévisionnelles (P-VOP) et des composantes d'image à interpolation bidirectionnelle (B-VOP), comprenant les étapes suivantes :
- pour les composantes d'image à interpolation bidirectionnelle (B-VOP), on utilise comme valeurs de référence pour le codage, chaque fois les composantes d'image à codage en technique intratrame (I-VOP) ou les composantes d'image prévisionnelles (P-VOP) qui sont moins distantes dans le temps de chaque composante d'image actuelle à interpolation bidirectionnelle (B-VOP).

2. Procédé selon la revendication 1,
**caractérisé par** les étapes suivantes :
- si, avant une composante d'image à interpolation bidirectionnelle actuelle (B-VOP), il manque une composante d'image à codage en technique intratrame (I-VOP) ou une composante d'image prévisionnelle (P-VOP), on utilise comme valeur de référence pour le codage du contour de la composante d'image à interpolation bidirectionnelle (B-VOP), la composante codée selon la technique intratrame (I-VOP) ou la composante d'image prévisionnelle (P-VOP), qui suit dans le temps la composante d'image à interpolation bidirectionnelle (B-VOP)
- s'il manque une composante d'image à codage en technique intratrame (I-VOP) ou prévisionnelle (P-VOP) située postérieurement après une composante d'image à interpolation bidirectionnelle actuelle (B-VOP), on utilise comme référence pour le codage du contour de la composante d'image (B-VOP) à interpolation bidirectionnelle, la composante (I-VOP) à codage en technique intratrame ou la composante d'image (P-VOP) prévisionnelle, située dans le temps antérieurement à la composante d'image à interpolation bidirectionnelle (B-VOP).

3. Procédé selon la revendication 1,
**caractérisé par** l'étape suivante :
- si une composante d'image (B-VOP) à interpolation bidirectionnelle actuelle est équidistante dans le temps à la fois par rapport à une composante d'image (I-VOP) à codage en technique intratrame ou par rapport à une composante d'image prévisionnelle (P-VOP), antérieure ou postérieure, alors on utilise toujours l'une de ces deux composantes d'image comme valeurs de référence pour le codage du contour de la composante d'image à interpolation bidirectionnelle actuelle.

4. Procédé selon la revendication 3,
**caractérisé en ce qu'**
on prend toujours comme valeur de référence pour le codage du contour de la composante d'image à interpolation bidirectionnelle actuelle, la composante d'image (I-VOP) à codage en technique intratrame, ou la composante d'image (P-VOP) prévisionnelle,qui suit dans le temps une composante d'image (B-VOP) à interpolation bidirectionnelle actuelle.

5. Application du procédé selon l'une quelconque des revendications 1 à 4, pour le décodage de composantes d'image à codage de contour MPEG-4.
